# EUROPEAN PATENT APPLICATION

(11) **EP 4 827 151 A1**
(43) Date of publication of application: **21.10.2026**
(21) Application number: 24915145.7
(22) Date of filing: 24.12.2024
(51) Int. Cl.: H04W 24/02

(54) **METHOD AND APPARATUS FOR FEEDING BACK CHANNEL INFORMATION**

(30) Priority: 05.01.2024 CN 202410029499
(71) Applicant: Huawei Technologies Co., Ltd., Shenzhen, Guangdong 518129 (CN)
(72) Inventor: MA, He, Shenzhen, Guangdong 518129 (CN); MA, Mengyao, Shenzhen, Guangdong 518129 (CN); LI, Jiahui, Shenzhen, Guangdong 518129 (CN); LIU, Kai, Shenzhen, Guangdong 518129 (CN)
(74) Representative: Maiwald GmbH
(86) International application number: PCT/CN2024/141853
(87) International publication number: WO 2025/145930

(57) **Abstract**

A channel information feedback method and an apparatus are provided. The method includes: An access network device sends a feedback mode map to a terminal, where the feedback mode map includes correspondences between different spaces and feedback modes. The terminal matches a corresponding space based on geographical location information of the terminal, and feeds back channel information to the access network device based on the feedback mode corresponding to the space, thereby improving feedback efficiency of downlink data and reducing air interface overhead.

## Description

### CROSS-REFERENCE TO RELATED APPLICATIONS

This application claims priority to Chinese Patent Application No. 202410029499.2, filed with the China National Intellectual Property Administration on January 5, 2024 and entitled "CHANNEL INFORMATION FEEDBACK METHOD AND APPARATUS", which is incorporated herein by reference in its entirety.

### TECHNICAL FIELD

This application relates to the field of communication technologies, and in particular, to a channel information feedback method and an apparatus.

### BACKGROUND

With the continuous development of wireless communication, application scenarios of wireless communication have become increasingly diverse, for example, smartphones, the internet of vehicles, and the internet of things. As a quantity of terminals continues to grow, requirements for communication quality are also increasing. It is expected that next-generation wireless communication systems will generate a large amount of air interface data, such as channel information. How a terminal can efficiently feed back information to an access network device is a research direction.

### SUMMARY

Embodiments of this application provide a channel information feedback method and an apparatus, so as to reduce transmission overhead caused by air interface data and improve information feedback efficiency.

According to a first aspect, a channel information feedback method is provided. The method is applied to a first communication apparatus and includes: obtaining indication information of a correspondence between spatial information and a feedback mode, where the feedback mode includes a mode in which the first communication apparatus feeds back channel information to a second communication apparatus; and feeding back first information to the second communication apparatus, where the first information is determined based on a first feedback mode, and the first feedback mode is determined based on the correspondence between the spatial information and the feedback mode and location information of the first communication apparatus.

According to the foregoing design, in an example in which the first communication apparatus is a terminal and the second communication apparatus is an access network device, the access network device sends a feedback mode map to the terminal, where the feedback mode map includes a correspondence between different spaces and feedback modes. The terminal matches a corresponding space based on geographical location information of the terminal, and feeds back the channel information to the access network device based on a feedback mode corresponding to the space, thereby improving feedback efficiency of downlink data and reducing air interface overhead.

In a possible implementation, the feedback mode includes a feedback mode associated with an electromagnetic map or a feedback mode independent of an electromagnetic map. For example, the feedback mode associated with the electromagnetic map includes a mode for feeding back location information and a mode for feeding back calibrated multipath information. The feedback mode independent of the electromagnetic map includes a type-II channel state information CSI feedback mode, an artificial intelligence AI feedback mode, and a prediction-based feedback mode.

In a possible implementation, the method further includes: feeding back second information to the second communication apparatus, where the second information is accuracy information of the channel information fed back by the first terminal apparatus in different feedback modes, and the accuracy information of the channel information is used for determining the correspondence between the spatial information and the feedback mode.

According to the foregoing design, when receiving the second information, the second communication apparatus may determine the correspondence between the spatial information and the feedback mode based on the second information.

In a possible implementation, the accuracy information of the channel information fed back in the different feedback modes includes: accuracy information of the channel information fed back by the first communication apparatus at different locations and/or at different times in the different feedback modes.

In a possible implementation, that the first feedback mode is determined based on the correspondence between the spatial information and the feedback mode and the location information of the first communication apparatus includes: the first feedback mode is a feedback mode corresponding to first spatial information, and the first spatial information is determined based on the location information of the first communication apparatus.

In a possible implementation, the spatial information is represented in the following manners: a reference point in the electromagnetic map, a leaf node of a K-ary tree, or a reference point in a geographical map.

In a possible implementation, when the spatial information is represented by using the reference point in the electromagnetic map, the obtaining the indication information of the correspondence between the spatial information and the feedback mode includes: obtaining the electromagnetic map, where the electromagnetic map includes indication information of a correspondence between the reference point and the feedback mode.

According to the foregoing design, in a manner of sending the electromagnetic map and the correspondence between the spatial information and the feedback mode in an integrated manner, the access network device does not need to additionally indicate the spatial information in the correspondence to the terminal, and only needs to indicate the feedback mode in the correspondence.

In a possible implementation, when the first feedback mode is associated with the electromagnetic map when the first information is fed back, the method further includes: obtaining the electromagnetic map of the first spatial information corresponding to the first feedback mode.

According to the foregoing design, in the correspondence between the spatial information and the feedback mode, the feedback mode is related to the electromagnetic map, that is, when feeding back the first information in the feedback mode, the terminal needs to use the electromagnetic map; and the feedback mode is independent of the electromagnetic map, that is, when feeding back the first information in the feedback mode, the terminal does not need to use the electromagnetic map. In this embodiment of this application, when a feedback mode is associated with the electromagnetic map when the first information is fed back, assuming that the feedback mode is the first feedback mode, the access network device may send, to the terminal, the electromagnetic map of the first spatial information corresponding to the first feedback mode; or when a feedback mode is independent of the electromagnetic map when the first information is fed back, assuming that the feedback mode is a second feedback mode, the access network device no longer sends, to the terminal, an electromagnetic map of second spatial information corresponding to the second feedback mode. According to the foregoing descriptions, the access network device sends, to the terminal, a part of the electromagnetic map corresponding to the spatial information, and does not need to send the complete electromagnetic map, thereby reducing radio resource overhead for transmitting the electromagnetic map.

In a possible implementation, the method further includes: obtaining third information, where the third information is used for updating the correspondence between the spatial information and the feedback mode.

According to the foregoing design, the access network device can flexibly update the correspondence between the spatial information and the feedback mode, so that the terminal can transmit the channel information in a corresponding space in an optimal feedback mode. Further, the access network device may refine the correspondence between the spatial information and the feedback mode based on accuracy information of different feedback modes reported by the terminal, to improve granularity of the spatial information and the feedback mode.

In a possible implementation, the updating the correspondence between the spatial information and the feedback mode includes at least one of the following: deleting a feedback mode corresponding to one or more pieces of spatial information, replacing a feedback mode corresponding to one or more pieces of spatial information, or adding a feedback mode corresponding to one or more pieces of spatial information.

In a possible implementation, the adding the feedback mode corresponding to the one piece of spatial information includes: adding a correspondence between the one piece of spatial information and the feedback mode; or dividing the spatial information into a plurality of pieces of sub-spatial information, and adding correspondences between the plurality of subspaces and the feedback mode.

According to a second aspect, a channel information feedback method is provided. The method is applied to a second communication apparatus and includes: sending indication information of a correspondence between spatial information and a feedback mode to a first communication apparatus, where the feedback mode includes a mode in which the first communication apparatus feeds back channel information to the second communication apparatus; and receiving first information from the first communication apparatus, where the first information is determined based on a first feedback mode, and the first feedback mode is determined based on the correspondence between the spatial information and the feedback mode and location information of the first communication apparatus.

In a possible implementation, the feedback mode includes a feedback mode associated with an electromagnetic map or a feedback mode independent of an electromagnetic map. Optionally, the feedback mode associated with the electromagnetic map includes a mode for feeding back location information and a mode for feeding back calibrated multipath information. The feedback mode independent of the electromagnetic map includes a type-II channel state information CSI feedback mode, an artificial intelligence AI feedback mode, and a prediction-based feedback mode.

In a possible implementation, the method further includes: receiving second information from the first communication apparatus, where the second information is accuracy information of the channel information fed back by the first terminal apparatus in different feedback modes, and the accuracy information of the channel information is used for determining the correspondence between the spatial information and the feedback mode.

In a possible implementation, the accuracy information of the channel information fed back in the different feedback modes includes: accuracy information of the channel information fed back by the first communication apparatus at different locations and/or at different times in the different feedback modes.

In a possible implementation, that the first feedback mode is determined based on the correspondence between the spatial information and the feedback mode and the location information of the first communication apparatus includes: the first feedback mode is a feedback mode corresponding to first spatial information, and the first spatial information is determined based on the location information of the first communication apparatus.

In a possible implementation, the spatial information is represented in the following manners: a reference point in the electromagnetic map, a leaf node of a K-ary tree, or a reference point in a geographical map.

In a possible implementation, when the spatial information is represented by using the reference point in the electromagnetic map, the sending the indication information of the correspondence between the spatial information and the feedback mode includes: sending the electromagnetic map, where the electromagnetic map includes indication information of a correspondence between the reference point and the feedback mode.

In a possible implementation, when the first feedback mode is associated with the electromagnetic map when the first information is fed back, the method further includes: sending the electromagnetic map of the first spatial information corresponding to the first feedback mode.

In a possible implementation, the method further includes: sending third information, where the third information is used for updating the correspondence between the spatial information and the feedback mode.

In a possible implementation, the updating the correspondence between the spatial information and the feedback mode includes at least one of the following: deleting a feedback mode corresponding to one or more pieces of spatial information, replacing a feedback mode corresponding to one or more pieces of spatial information, or adding a feedback mode corresponding to one or more pieces of spatial information.

In a possible implementation, the adding the feedback mode corresponding to the one piece of spatial information includes: adding a correspondence between the one piece of spatial information and the feedback mode; or dividing the spatial information into a plurality of pieces of sub-spatial information, and adding correspondences between the plurality of subspaces and the feedback mode.

According to a third aspect, an apparatus is provided. The apparatus can implement the method in the first aspect. For example, the apparatus includes a corresponding means (means) for implementing the first aspect. The apparatus may be implemented by hardware, implemented by software, or implemented by hardware executing corresponding software.

In a possible design, the apparatus includes a unit for implementing the first aspect.

In a possible design, the apparatus includes a processor, and the processor is configured to perform the method in the first aspect.

In a possible design, the apparatus includes a processing circuit and an interface circuit. The interface circuit is configured to receive a signal from another apparatus other than the apparatus and transmit the signal to the processing circuit, or send a signal from the processing circuit to another apparatus other than the apparatus. The processing circuit is configured to implement the method in the first aspect by using a logic circuit or by executing code instructions. Optionally, the processing circuit may be a processor, and the interface circuit may be a transceiver or an input/output interface.

In a possible design, the apparatus includes a processor and a memory. The processor is configured to execute a computer program or instructions stored in the memory. The memory is configured to store the computer program or the instructions. When the computer program or the instructions are run, the method in the first aspect is performed.

Optionally, the apparatus may be a first apparatus, or may be a module or unit (for example, a chip, a chip system, or a circuit) that is in the first apparatus and that is in one-to-one correspondence with the method/operation/step/action described in the first aspect, or may be used in cooperation with the first apparatus.

According to a fourth aspect, an apparatus is provided. The apparatus can implement the method in the second aspect. For example, the apparatus includes a corresponding means (means) for implementing the second aspect. The apparatus may be implemented by hardware, implemented by software, or implemented by hardware executing corresponding software.

In a possible design, the apparatus includes a unit for implementing the second aspect.

In a possible design, the apparatus includes a processor, and the processor is configured to perform the method in the second aspect.

In a possible design, the apparatus includes a processing circuit and an interface circuit. The interface circuit is configured to receive a signal from another apparatus other than the apparatus and transmit the signal to the processing circuit, or send a signal from the processing circuit to another apparatus other than the apparatus. The processing circuit is configured to implement the method in the second aspect by using a logic circuit or by executing code instructions.

In a possible design, the apparatus includes a processor and a memory. The processor is configured to execute a computer program or instructions stored in the memory. The memory is configured to store the computer program or the instructions. When the computer program or the instructions are run, the method in the second aspect is performed.

Optionally, the apparatus may be a second apparatus, or may be a module or unit (for example, a chip, a chip system, or a circuit) that is in the second apparatus and that is in one-to-one correspondence with the method/operation/step/action described in the second aspect, or may be used in cooperation with the second apparatus.

According to a fifth aspect, a computer-readable storage medium is provided. The computer-readable storage medium stores a computer program or instructions. When the computer program or the instructions are run on a computer, the computer is caused to perform the method in the first aspect or the second aspect.

According to a sixth aspect, a computer program product is provided. The computer program product includes a computer program or instructions used for performing the method in the first aspect, or the computer program product includes a computer program or instructions used for performing the method in the second aspect.

According to a seventh aspect, a chip is provided. The chip includes a processor. The processor is coupled to a memory, and is configured to execute a computer program or instructions stored in the memory, to cause the chip to implement the method in the first aspect or the second aspect.

According to an eighth aspect, a communication system is provided. The communication system includes a first communication apparatus and a second communication apparatus. The first communication apparatus is configured to implement the method in the first aspect, and the second communication apparatus is configured to implement the method in the second aspect.

### BRIEF DESCRIPTION OF DRAWINGS

FIG. 1 is a diagram of an architecture of a communication system according to an embodiment of this application;
FIG. 2 is a diagram of an electromagnetic map according to an embodiment of this application;
FIG. 3 is a schematic flowchart according to an embodiment of this application;
FIG. 4 is a diagram of a correspondence between spatial information and a feedback mode according to an embodiment of this application;
FIG. 5 is another diagram of a correspondence between spatial information and a feedback mode according to an embodiment of this application;
FIG. 6 is a diagram of further division of a reference point for spatial information and a feedback mode according to an embodiment of this application;
FIG. 7 is a diagram of accuracy reported by a terminal corresponding to different feedback modes according to an embodiment of this application;
FIG. 8 is a diagram of transmitting first information and second information together according to an embodiment of this application;
FIG. 9a and FIG. 9b are diagrams of a correspondence between spatial information and a feedback mode according to an embodiment of this application;
FIG. 10a, FIG. 10b, FIG. 10c, FIG. 10d, and FIG. 11 are diagrams of updating spatial information and feedback modes according to embodiments of this application;
FIG. 12 is another schematic flowchart according to an embodiment of this application; and
FIG. 13 and FIG. 14 are diagrams of structures of apparatuses according to embodiments of this application.

### DESCRIPTION OF EMBODIMENTS

To make objectives, technical solutions, and advantages of this application clearer, the following further describes this application in detail with reference to the accompanying drawings. Specific operation methods, function descriptions, and the like in method embodiments may also be applied to apparatus embodiments or system embodiments.

Numerals and terms such as "first" and "second" in embodiments of this application are merely used for differentiation for ease of description, and are not intended to limit the scope of embodiments of this application. Sequence numbers of the foregoing processes do not mean an execution sequence, and the execution sequence of the processes should be determined based on functions and internal logic of the processes.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. "Including at least one of A, B, or C" may indicate: including A; including B; including C; including A and B; including A and C; including B and C; and including A, B, and C.

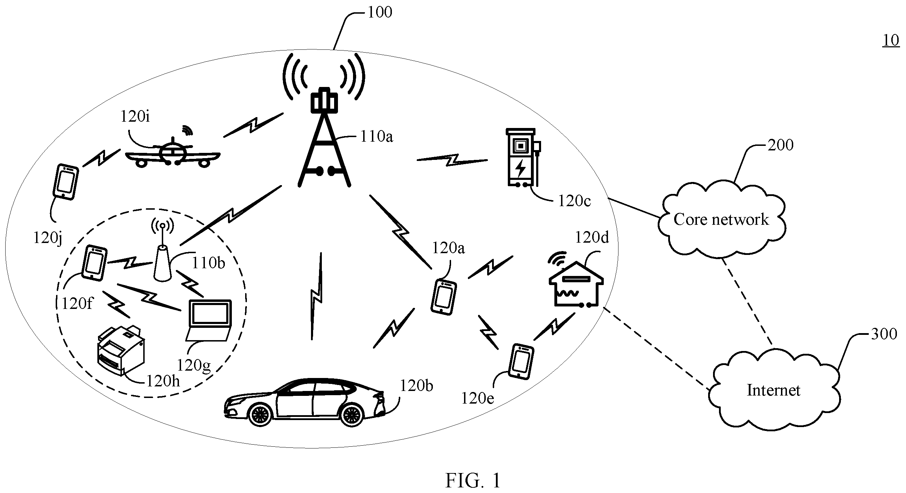

FIG. 1 is a diagram of a possible and non-limiting system. As shown in FIG. 1, a communication system 10 includes a radio access network (radio access network, RAN) 100 and a core network (core network, CN) 200. Optionally, an internet 300 is further included.

### 1. RAN

The RAN 100 includes at least one RAN node (for example, 110a and 110b in FIG. 1, collectively referred to as 110) and at least one terminal (for example, 120a to 120j in FIG. 1, collectively referred to as 120). The RAN 100 may further include another RAN node, for example, a wireless relay device and/or a wireless backhaul device (not shown in FIG. 1).

The terminal 120 may be connected to the RAN node 110 in a wireless manner. The RAN node 110 is connected to the core network 200 in a wireless or wired manner. A core network element in the core network 200 and the RAN node 110 in the RAN 100 may be different physical devices, or may be a same physical device that integrates a logical function of the core network element and a logical function of the radio access network.

A plurality of RAN nodes 110 in the communication system 10 may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal.

The RAN 100 may be a cellular system related to a 3rd generation partnership project (3rd generation partnership project, 3GPP), for example, a 4th generation (4th generation, 4G) mobile communication system, a 5th generation (5th generation, 5G) mobile communication system, or a future-oriented evolved system, for example, a 6th generation (6th generation, 6G) mobile communication system. The RAN 100 may alternatively be an open access network (open RAN, O-RAN, or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

### 1.1. RAN node

In a possible scenario, the RAN node may be a base station (base station), an evolved NodeB (evolved NodeB, eNodeB), an access point (access point, AP), a transmission reception point (transmission reception point, TRP), a next-generation NodeB (next-generation NodeB, gNB), a next-generation base station in a 6G mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or a part of functions of the RAN node in embodiments of this application may alternatively be implemented by using a software function running on hardware, or may be implemented by using a virtualization function instantiated on a platform (for example, a cloud platform). The RAN node in embodiments of this application may alternatively be a logical node, a logical module, or software that can implement all or a part of the functions of the RAN node.

In another possible scenario, the plurality of RAN nodes cooperate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (the CU-CP or the CU-UP), the DU, and the RU in this application may be implemented by a software module, a hardware module, or a combination of a software module and a hardware module.

Alternatively, the RAN node may be sometimes referred to as an access network device, a RAN entity, an access node, or the like, and forms a part of the communication system, to help the terminal implement radio access. In subsequent descriptions of this application, unless otherwise specified, the "access network device" is used for description.

It may be understood that the access network device may be referred to as a communication apparatus. For example, the access network device may be understood as an apparatus having a function of the access network device. For example, an apparatus configured to implement the function of the access network device may be an access network device, or a part of elements in the access network device, for example, the CU or the DU; or may be an apparatus, for example, a chip system, a hardware circuit, a software module, or a combination of a hardware circuit and a software module, that can support the access network device in implementing the function. The apparatus may be installed in the access network device or may be used in combination with the access network device. In embodiments of this application, the chip system may include a chip, or may include a chip and another discrete component.

### 1.2. Terminal

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality (virtual reality, VR), augmented reality (augmented reality, AR), industrial control, autonomous driving, telemedicine, a smart grid, smart furniture, a smart office, a smart wearable, smart transportation, and a smart city. The terminal may be a mobile phone, a head-mounted display device, a tablet computer, a computer having a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

It may be understood that the terminal may be referred to as a communication apparatus. For example, the terminal may be understood as an apparatus having a function of the terminal. For example, an apparatus configured to implement the function of the terminal may be a terminal; or may be an apparatus, for example, a chip system, a hardware circuit, a software module, or a combination of a hardware circuit and a software module, that can support the terminal in implementing the function. The apparatus may be installed in the terminal or may be used in combination with the terminal.

### 2. CN

The CN 200 includes at least one core network element. A 5G communication system is used as an example. The CN 200 includes an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, and the like.

In the communication system shown in FIG. 1, an electromagnetic map is provided in the access network device. For example, the access network device establishes the electromagnetic map through actual measurement, environmental modeling and ray tracing (ray tracing, RT), artificial intelligence (artificial intelligence, AI), or other manners. The electromagnetic map represents distribution of electromagnetic signals in an environment, and records strength and characteristics of various electromagnetic signals in a specific area. For example, the electromagnetic map may partially or fully include, but is not limited to, multipath information, noise levels, spectrum occupancy, and the like of one or more locations. For example, the electromagnetic map may include information about a regular area and/or information about an irregular area. Each area corresponds to one or more reference points. The regular area may also be referred to as a grid area, and a reference point corresponding to the grid area may also be referred to as a grid, a grid point, or the like. For example, the area may include the following information:
1. channel state information, including:
   (a) at least one path, where each path corresponds to one piece of multipath information; and
   (b) a scalar strength indicator, for example, a channel impulse response (channel impulse response, CIR), a channel quality indicator (channel quality indicator, CQI), a power delay profile (power delay profile, PDP), or an angle delay profile (angle delay profile, ADP);
2. information about a scattering point or a virtual anchor (virtual anchor) of a virtual station; and
3. other information.

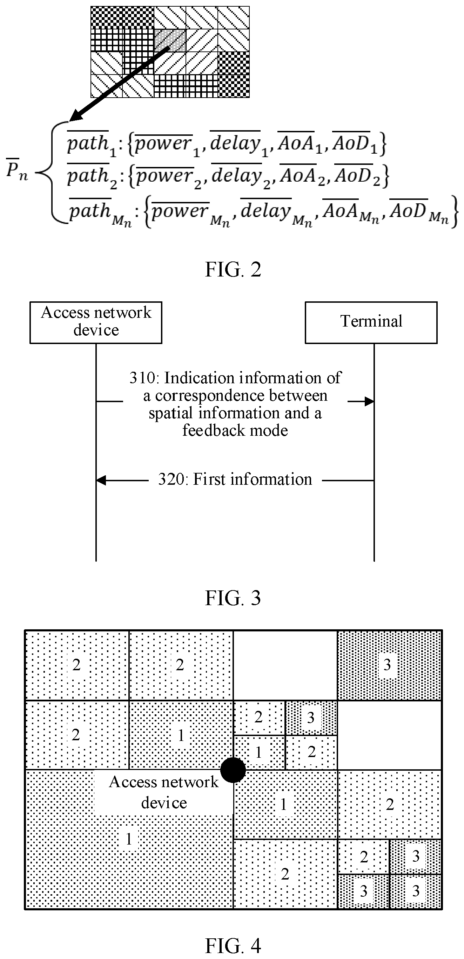

Multipath information in the channel state information is used as an example. An electromagnetic map ***P̅*** on an access network device side corresponds to at least one reference point, and each reference point corresponds to one geographical area and represents multipath information from an access network device to a terminal in the geographical area. As shown in FIG. 2, the electromagnetic map ***P̅*** mainly includes:
1. electromagnetic map elements {*P̅*₁, *P̅*₂, ... , *P̅_{N}*} of N reference points, where N is an integer greater than zero;
2. an electromagnetic map element *P̅ₙ* of each reference point includes multipath information of *Mₙ* paths (paths) between the access network device and the reference point, where *Mₙ* is an integer greater than 0; and
3. multipath information of each path includes amplitude, a delay (delay), and angles, where the amplitude may be present in a form of amplitude or power (power) of a signal; if the access network device and the terminal use a dual-polarized antenna, the amplitude is a 2×2 matrix, and the angles include an angle of arrival (angle of arrival, AoA) and an angle of departure (angle of departure, AoD); and further, if an antenna array is a uniform linear array (uniform linear array, ULA), the AoA and the AoD are scalars; or if an antenna array is a uniform planar array (uniform planar array, UPA), the AoA and the AoD may be represented by using an elevation angle and an azimuth angle. In the following descriptions, an example in which the "amplitude" is the "power" and the angles include the AoA and the AoD is used for description.

In the communication system shown in FIG. 1, the terminal may feed back downlink channel information to the access network device. The access network device performs precoding and another similar operation on downlink data based on the downlink channel information fed back by the terminal, to improve transmission quality of the downlink data. In a solution, the terminal feeds back the downlink channel information to the access network device in a single feedback mode. Because preferred feedback modes corresponding to the terminal at different geographical locations are different, feeding back downlink data information to the access network device in the single feedback mode by the terminal may result in low feedback efficiency of the downlink data information and high air interface overhead.

In view of this, embodiments of this application provide a channel information feedback method and an apparatus. The method includes: An access network device sends a feedback mode map to a terminal, where the feedback mode map includes correspondences between different spaces and feedback modes. The terminal matches a corresponding space based on geographical location information of the terminal, and feeds back channel information to the access network device based on a feedback mode corresponding to the space, thereby improving feedback efficiency of downlink data and reducing air interface overhead.

In the following procedure descriptions, the "terminal" and the "access network device" are used as execution bodies for description. The "terminal" may be understood as an apparatus having a function of the terminal. For example, the "terminal" may be replaced with a "first communication apparatus", and the first communication apparatus is an apparatus that implements the function of the terminal. For example, the first communication apparatus is the terminal, or the first communication apparatus may be a module (for example, a chip or a circuit) in the terminal. The "access network device" may be understood as an apparatus having a function of the access network device. For example, the "access network device" may be replaced with a "second communication apparatus", and the second communication apparatus is an apparatus that implements the function of the access network device. For example, the second communication apparatus is the access network device, or the second communication apparatus may be a module (for example, a chip or a circuit) in the access network device, or may be a logical node (for example, a CU, a DU, or an RU), a logical module, software, or the like that fully or partially implements the function of the access network device.

### [Embodiment 1]

FIG. 3 is a schematic flowchart according to an embodiment of this application, including the following steps.

Step 310: An access network device sends indication information of a correspondence between spatial information and a feedback mode to a terminal, and the terminal receives the indication information of the correspondence between the spatial information and the feedback mode from the access network device.

For example, the feedback mode includes a mode in which the terminal feeds back channel information to the access network device. The terminal may determine the correspondence between the spatial information and the feedback mode based on the received indication information of the correspondence between the spatial information and the feedback mode. In a possible implementation, the access network device sends a feedback mode map to the terminal, where the feedback mode map includes the indication information of the correspondence between the spatial information and the feedback mode. The indication information may explicitly indicate the correspondence between the spatial information and the feedback mode, or implicitly indicate the correspondence between the spatial information and the feedback mode. This is not limited. When receiving the feedback mode map, the terminal obtains, from the feedback mode map, the indication information of the correspondence between the spatial information and the feedback mode, and determines the correspondence between the spatial information and the feedback mode. For example, the feedback mode map sent by the access network device to the terminal includes correspondences between K pieces of spatial information and the feedback mode, a correspondence between one piece of spatial information and the feedback mode is represented as *Fᵢ*, i is a positive integer greater than or equal to 1 and less than or equal to K, and K is an integer greater than or equal to 1. The feedback mode map may be represented as F: {F₁, ... , F_{K}} , specifically including: *F*: {{spatial information 1, feedback mode}, {spatial information 2, feedback mode}, ..., and {spatial information K, feedback mode}}.

### 1. Indication of the feedback mode

The access network device may indicate, to the terminal, a feedback mode corresponding to each piece of spatial information. Alternatively, the access network device and the terminal may pre-agree on a correspondence between the feedback mode and an index (index) of the feedback mode. When indicating the correspondence between the spatial information and the feedback mode to the terminal, the access network device may indicate, to the terminal, the index corresponding to the feedback mode. The "index" may be replaced with an "identifier".

The "feedback mode" may be a feedback mode used when the terminal feeds back the channel information to the access network device. For example, the feedback mode includes a feedback mode associated with an electromagnetic map or a feedback mode independent of an electromagnetic map. The feedback mode associated with the electromagnetic map means that, when first information is fed back in the feedback mode, the electromagnetic map needs to be used. The feedback mode independent of the electromagnetic map means that, when first information is fed back in the feedback mode, the electromagnetic map does not need to be used.

For example, the feedback mode associated with the electromagnetic map includes a mode for feeding back location information and a mode for feeding back calibrated multipath information.

In the mode for feeding back location information, the terminal determines a matched reference point in the electromagnetic map based on the location information. For example, each reference point in the electromagnetic map has a specific coverage area, and the terminal may determine, in the electromagnetic map, a reference point that may cover a current location of the terminal, where the reference point is considered as the matched reference point. Location information of the terminal may be geographical location information of the terminal, and a geographical location of the terminal may be represented in a form of coordinates. For example, the geographical location of the terminal is represented by using a longitude coordinate of the terminal and a latitude coordinate of the terminal, and further includes a height coordinate of the terminal. The terminal may feed back location information of the matched reference point to the access network device. The access network device determines multipath information of the reference point based on the location information of the reference point fed back by the terminal, and further performs precoding and another similar operation on downlink data based on the multipath information of the reference point. For example, the location information of the reference point may be an index of the reference point, or coordinates of the reference point in the electromagnetic map. Alternatively, the terminal may feed back the location information of the terminal to the access network device. When receiving the location information of the terminal, the access network device determines the matched reference point in the electromagnetic map; and the access network device performs precoding and another similar operation on downlink data based on multipath information of the matched reference point.

In the mode for feeding back calibrated multipath information, the terminal performs channel estimation on a downlink reference signal to determine local multipath information. The terminal determines a matched reference point in the electromagnetic map based on the location information of the terminal; and the terminal calibrates the local multipath information based on multipath information of the matched reference point, to determine the calibrated multipath information. The terminal feeds back the calibrated multipath information to the access network device, and the access network device performs precoding and another similar operation on the downlink data based on the calibrated multipath information. Optionally, in the mode for feeding back calibrated multipath information, the terminal may further feed back location information of the terminal to the access network device.

The feedback mode independent of the electromagnetic map includes a type-II channel state information (channel state information, CSI) feedback mode, an artificial intelligence (artificial intelligence, AI) feedback mode, and a prediction-based feedback mode.

The type-II CSI feedback mode includes a type-II CSI codebook (codebook), which is referred to as type-II CSI for short. In the type-II CSI feedback mode, the terminal receives a downlink reference signal from the access network device, and determines CSI based on the downlink reference signal; and the terminal feeds back compressed CSI to the access network device. The access network device decompresses the compressed CSI, and recovers downlink channel information based on the decompressed CSI. Further, the access network device may perform precoding and another similar operation on downlink data based on recovered downlink channel information, to improve transmission quality of the downlink data.

In the AI feedback mode, the terminal measures a downlink reference signal to determine downlink channel information, the terminal may input the downlink channel information into an AI compression model, where an output of the AI compression model is compressed CSI, the terminal feeds back the compressed CSI to the access network device, and the access network device inputs the received compressed CSI into a CSI decompression model, where an output of the CSI decompression model is recovered downlink channel information and the like. Further, the access network device performs precoding and another similar operation on downlink data based on the recovered downlink channel information.

In the prediction-based feedback mode, the access network device predicts channel information by using algorithms such as an autoregressive model algorithm and a Kalman filtering algorithm. Further, the access network device may correct the predicted channel information based on the channel information reported by the terminal.

For example, the correspondence between the feedback mode and the index is shown in Table 1.

**Table 1**

| Index | Feedback mode |
|---|---|
| 1 | Mode for feeding back location information |
| 2 | Mode for feeding back calibrated multipath information |
| 3 | Type-II CSI feedback mode |
| 4 | AI feedback mode |
| 5 | Prediction-based feedback mode |

It may be understood that the correspondence between the feedback mode and the index may be preset, for example, specified in a protocol. Alternatively, the correspondence between the feedback mode and the index may be configured by the access network device for the terminal. For example, the access network device configures the correspondence between the feedback mode and the index for the terminal by using radio resource control (radio resource control, RRC) signaling.

### 2. Indication of the spatial information

The spatial information is represented in the following manners: a reference point in the electromagnetic map, a leaf node of a K-ary tree, or a reference point in a geographical map.

### (a) The reference point in the electromagnetic map

For example, the correspondence between the spatial information and the feedback mode indicated by the access network device to the terminal includes a correspondence between the reference point in the electromagnetic map and the feedback mode, which may be represented as [reference point in the electromagnetic map, feedback mode]. Optionally, the reference point in the electromagnetic map may be specifically represented by using coordinates of the reference point in the electromagnetic map, an index of the reference point, or the like.

In a possible implementation, the access network device indicates the correspondence between the reference point in the electromagnetic map and the feedback mode by using a bitmap (bitmap). For example, the electromagnetic map includes five reference points, and the five reference points may be represented by using a bitmap with a length of 5 bits. Correspondences between the reference points and feedback modes indicated by the access network device to the terminal are [01100, feedback mode 1], [10000, feedback mode 2], and [00011, feedback mode 3], indicating that a reference point 3 and a reference point 4 correspond to the feedback mode 1, a reference point 5 corresponds to the feedback mode 2, and a reference point 1 and a reference point 2 correspond to the feedback mode 3.

As shown in FIG. 4, the access network device sends the correspondence between the reference point in the electromagnetic map and the feedback mode to the terminal. The reference point may be indicated by using coordinates of the reference point, an index of the reference point, a bitmap, or the like. In FIG. 4, there are three feedback modes, which are respectively represented as 1, 2, and 3. The access network device indicates the correspondence between the reference point and the feedback mode to the terminal by using a geographical location of the access network device as a center.

In FIG. 4, boxes vary in size. It may be understood that a smallest-granularity box in FIG. 4 may represent an area corresponding to one reference point. One large-granularity box may include a plurality of small-granularity boxes, that is, one large-granularity box includes a plurality of reference points. Because feedback modes corresponding to plurality of reference points are the same and the plurality of reference points are adjacent, the plurality of reference points are represented by using one large-granularity box.

For example, the terminal determines the matched reference point in the electromagnetic map based on the location information of the terminal. For example, when the terminal is located in a coverage area of a reference point, it is considered that the terminal matches the reference point. Alternatively, when a distance between the terminal and a central location of a reference point is less than a threshold, it is considered that the terminal matches the reference point. The terminal determines, based on the correspondence between the reference point and the feedback mode, a feedback mode corresponding to the matched reference point. The terminal feeds back the first information to the access network device based on the matched feedback mode. It may be understood that the terminal may obtain the electromagnetic map. A manner in which the terminal obtains the electromagnetic map includes but is not limited to the following manners: The access network device sends the electromagnetic map to the terminal, and the terminal receives the electromagnetic map from the access network device. The access network device may be the access network device in step 310 and step 320 in FIG. 3. Alternatively, a plurality of access network devices send electromagnetic maps to the terminal, and the terminal determines the electromagnetic map in this embodiment of this application based on the electromagnetic maps sent by the plurality of access network devices. For example, each of the plurality of access network devices sends a part of the electromagnetic map to the terminal, and the terminal combines the electromagnetic maps sent by the plurality of access network devices, to determine the electromagnetic map in this embodiment of this application. Alternatively, the terminal may obtain the electromagnetic map in a D2D manner. For example, another terminal sends the electromagnetic map to the terminal, and the terminal receives the electromagnetic map from the another terminal.

### (b) The leaf node of the K-ary tree

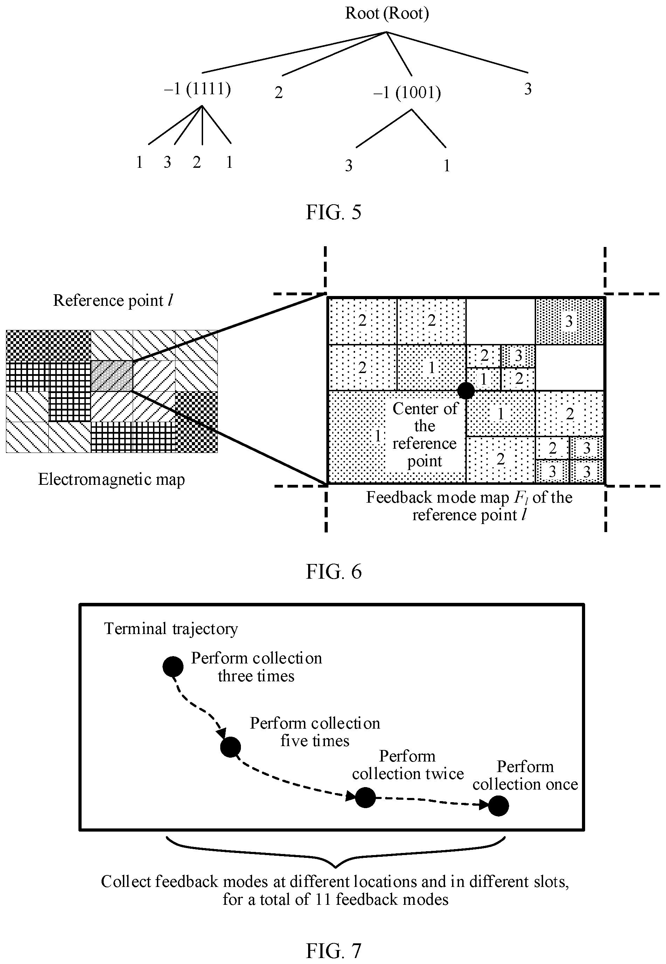

For example, the K-ary tree includes at least two levels, where a node at a 1^{st} level is a root node, and a node at a last level is referred to as a leaf node. Optionally, if another level is included in addition to the 1^{st} level and the last level, a node at the another level is referred to as an intermediate node. A quadtree is used as an example. The quadtree means that each node corresponds to four child nodes. For example, as shown in FIG. 5, the quadtree includes three levels, a node at a 1^{st} level is referred to as a root node, the root node corresponds to four child nodes, and a 2^{nd} level includes four intermediate nodes. An intermediate node 1 and an intermediate node 3 each correspond to different feedback modes. Therefore, key value information corresponding to the intermediate node 1 and key value information corresponding to the intermediate node 3 are "special values". For example, the special value may be -1. Further, the access network device indicates feedback modes corresponding to four child nodes of the intermediate node 1: a feedback mode 1, a feedback mode 3, a feedback mode 2, and the feedback mode 1. The access network device indicates feedback modes corresponding to a child node 1 and a child node 4 of the intermediate node 3: the feedback mode 3 and the feedback mode 1. Optionally, when feedback modes corresponding to child nodes of an intermediate node are different, the access network device indicates, to the terminal, the child nodes of the feedback modes indicated by the access network device. For example, for the intermediate node 1, the access network device indicates 1111 to the terminal, indicating that the access network device indicates, to the terminal, feedback modes of the four child nodes corresponding to the intermediate node 1. For the intermediate node 3, the access network device indicates 1001 to the terminal, indicating that the access network device indicates, to the terminal, the feedback modes of the child node 1 and the child node 4 corresponding to the intermediate node 3. Optionally, for a child node 2 and a child node 3 of the intermediate node 3, the access network device does not indicate feedback modes corresponding to the child node 2 and the child node 3. When the terminal is located in a coverage area of the child node 2 and a coverage area of the child node 3, the terminal may not feed back the channel information to the access network device, or the terminal may feed back the channel information to the access network device according to a rule of the terminal. Feedback modes corresponding to an intermediate node 2 and an intermediate node 4 are consistent. Therefore, the access network device may indicate, to the terminal, the feedback modes corresponding to the intermediate node 2 and the intermediate node 4: the feedback mode 2 and the feedback mode 3.

In a possible implementation, the access network device may indicate the correspondence between the spatial information and the feedback mode by using [leaf-node topology structure, key value information]. The leaf-node topology structure represents the spatial information, and the key value information represents the feedback mode. For example, both the access network device and the terminal may obtain a geographical location corresponding to the root node. For example, the geographical location corresponding to the root node may be predefined, or may be configured by the access network device for the terminal. This is not limited. In addition, because the tree is a quadtree, the access network device may send key value information of the four nodes of the root node to the terminal. For example, the key value information corresponding to the intermediate node 1 is -1, indicating that the feedback modes of the four child nodes corresponding to the intermediate node 1 are different, and the access network device continues to indicate, to the terminal, the feedback modes corresponding to the four child nodes of the intermediate node 1. For another example, the key value information corresponding to the intermediate node 2 is 2, indicating that the intermediate node 2 corresponds to the feedback mode 2.

For example, the terminal determines, based on the geographical location of the root node and the K-ary tree, a geographical location corresponding to each node. The terminal determines a matched node based on the location information of the terminal. For example, when the terminal is located in a coverage area of a node, it is considered that the terminal matches the node. Alternatively, when a distance between the terminal and a node is less than a threshold, it is considered that the terminal matches the node. The terminal determines, based on a correspondence between a node and a feedback mode, a feedback mode corresponding to the matched node; and the terminal feeds back the first information to the access network device based on the corresponding feedback mode.

### (3) The reference point in the geographical map

The access network device may use a location as a center, and obtain several geographical areas through division. Each geographical area corresponds to one reference point. The access network device may indicate, to the terminal, the correspondence between the spatial information and the feedback mode, which is specifically a correspondence between the reference point in the geographical map and the feedback mode.

For example, the terminal determines, based on the location information of the terminal, a reference point that matches the terminal. For example, when the terminal is located in a coverage area of a geographical area corresponding to a reference point, it is considered that the terminal matches the reference point. Alternatively, when a distance between the terminal and a central location of a reference point is less than a threshold, it is considered that the terminal matches the reference point. The terminal determines, based on the correspondence between the reference point in the geographical map and the feedback mode, a feedback mode corresponding to the reference point that matches the terminal; and the terminal feeds back the first information to the access network device based on the corresponding feedback mode.

It may be understood that the terminal includes a radio frequency module (component) and a processing module (component). For example, the processing module includes a chip, for example, a system on chip (system on chip, SoC); and the radio frequency module may include a radio frequency front-end or a radio frequency front-end module. The radio frequency module receives, via an air interface, the indication information of the correspondence between the spatial information and the feedback mode from the access network device. The processing module obtains, by using the radio frequency module, the indication information of the correspondence between the spatial information and the feedback mode. In step 310, "receiving the indication information of the correspondence between the spatial information and the feedback mode from the access network device" may be replaced with "obtaining the indication information of the correspondence between the spatial information and the feedback mode". For example, that the processing module of the terminal obtains the indication information of the correspondence between the spatial information and the feedback mode may be understood as that the processing module of the terminal obtains, via an input/output (input/output, I/O) interface, information corresponding to the indication information of the correspondence between the spatial information and the feedback mode. For another example, that the radio frequency module of the terminal obtains the indication information of the correspondence between the spatial information and the feedback mode may be understood as that the radio frequency module of the terminal receives the indication information of the correspondence between the spatial information and the feedback mode from the access network device.

Step 320: The terminal sends the first information to the access network device, and the access network device receives the first information from the terminal.

For example, the first information is determined based on a first feedback mode, and the first feedback mode is determined based on the correspondence between the spatial information and the feedback mode and the location information of the terminal. For example, after obtaining the correspondence between the spatial information and the feedback mode, the terminal determines first spatial information based on the location information of the terminal; the terminal determines, based on the correspondence between the spatial information and the feedback mode, the first feedback mode corresponding to the first spatial information; the terminal determines the first information based on the first feedback mode; and the like. Information specifically included in the first information depends on the first feedback mode. In different feedback modes, the terminal may feed back different first information to the access network device.

It may be understood that, in the descriptions of this application, "sending" may be replaced with "feeding back". For example, that the terminal sends the first information to the access network device may be replaced with: The terminal feeds back the first information to the access network device. In a possible implementation, in step 320, the radio frequency module of the terminal may send the first information to the access network device via the air interface. For example, the processing module of the terminal outputs the first information to the radio frequency module via the I/O interface, and then the radio frequency module of the terminal sends the first information to the access network device via the air interface.

When the spatial information is represented by using the reference point in the electromagnetic map, the electromagnetic map and the correspondence between the spatial information and the feedback mode may be sent in an integrated manner.

That the terminal obtains the indication information of the correspondence between the spatial information and the feedback mode includes: The terminal obtains the electromagnetic map, where the electromagnetic map includes indication information of a correspondence between the reference point and the feedback mode. For example, the access network device may send the electromagnetic map to the terminal in a unicast, multicast, or broadcast manner.
1. One reference point in the electromagnetic map corresponds to one feedback mode. For example, in addition to multipath information of N reference points, the electromagnetic map further includes a feedback mode corresponding to the reference point. For example, a reference point l in the electromagnetic map is represented as *P̅ₗ̅* = {*p̅a̅t̅h̅*₁,...,*p̅a̅t̅h̅_{Ml}*,*Fₗ*}, indicating that the reference point l corresponds to a feedback mode *Fₗ*. It may be understood that, when no corresponding feedback mode is configured for a reference point in the electromagnetic map, a feedback mode corresponding to the reference point may be set to default.
2. A plurality of reference points in the electromagnetic map correspond to one feedback mode. For example, the electromagnetic map sent by the access network device to the terminal is represented as {{{*P̅*₁, *P̅*₂, ... , *P̅ₐ*}, *F*₁} , {{*P̅*_{*a*+1}, *P̅*₂, ... , *P̅_{b}*}, *F*₂} , ... }, indicating that a reference point 1 to a reference point a in the electromagnetic map correspond to a feedback mode *F*₁, and that a reference point a+1 to a reference point b correspond to a feedback mode *F*₂.

Alternatively, a feedback mode *Fᵢ* may be concatenated after the electromagnetic map. For example, the electromagnetic map sent by the access network device to the terminal is *P̅*: {*P̅*₁, *P̅*₂, ... , *P̅_{N}*, *F*₁, ... , *F_{K}*}. In this case, a correspondence between the N reference points and K feedback modes needs to be additionally determined. The correspondence between the N reference points and the K feedback modes may be predefined, may be configured by the access network device for the terminal, or the like. This is not limited. An advantage is that the correspondence between the reference point and the feedback mode can be flexibly configured.

In the foregoing manner of sending the electromagnetic map and the correspondence between the spatial information and the feedback mode in an integrated manner, the access network device does not need to additionally indicate spatial information in *Fᵢ* to the terminal, and only needs to feed back a feedback mode corresponding to *Fᵢ*.

Alternatively, the access network device may separately indicate the electromagnetic map and the correspondence between the spatial information and the feedback mode to the terminal. A manner in which the access network device sends the electromagnetic map to the terminal is not described again. The following focuses on a manner in which the access network device sends the correspondence between the spatial information and the feedback mode to the terminal.
1. Periodic: The terminal and the access network device pre-agree on a period T for sending the correspondence between the spatial information and the feedback mode. The access network device sends the correspondence between the spatial information and the feedback mode to the terminal based on the period T.
2. Aperiodic: The access network device may aperiodically send the correspondence between the spatial information and the feedback mode to the terminal. For example, when receiving activation signaling from an upper layer, the access network device sends the correspondence between the spatial information and the feedback mode to the terminal.

It may be understood that, in the foregoing descriptions, an example in which one or more reference points in the electromagnetic map correspond to one feedback mode is used for description. The correspondence between the spatial information and the feedback mode indicated by the access network device to the terminal may alternatively be associated with a reference point, and the reference point may be a reference point in the electromagnetic map or a reference point in the geographical map. For example, a reference point is used as a center, and the access network device may indicate a feedback mode corresponding to each sub-reference point in a coverage area corresponding to the reference point.

For example, for a reference point l, the access network device sends a feedback mode map *Fₗ* to the terminal. The feedback mode map *Fₗ* includes correspondences between K pieces of spatial information and a feedback mode. For example, the feedback mode map *Fₗ* is represented as: *Fₗ*: {{spatial information 1, feedback mode}, ..., and {spatial information K, feedback mode}}.

For example, as shown in FIG. 6, for the reference point l in the electromagnetic map, the access network device feeds back a feedback mode map *Fₗ* for the reference point l to the terminal. For example, for the reference point l, an area corresponding to the reference point l may be divided into a plurality of sub-reference points, and one or more sub-reference points correspond to one feedback mode. In FIG. 6, numbers "1", "2", and "3" represent a feedback mode 1, a feedback mode 2, and a feedback mode 3.

It may be understood that, in FIG. 6, a smallest-granularity box represents one sub-reference point, and a large-granularity box includes a plurality of small-granularity boxes. If feedback modes corresponding to a plurality of sub-reference points are the same, and areas of the plurality of sub-reference points are adjacent, boxes corresponding to the plurality of reference points form a large-granularity box.

In this embodiment of this application, the access network device may transmit a complete electromagnetic map to the terminal, or when a movement range of the terminal is small or an area of a reference point is large, the access network device may send, to the terminal, only a part of the electromagnetic map corresponding to the reference point, thereby reducing radio resource overhead for transmitting the electromagnetic map. Alternatively, in another possible implementation, in the correspondence between the spatial information and the feedback mode, some feedback modes are associated with the electromagnetic map, that is, when feeding back the first information in the feedback modes, the terminal needs to use the electromagnetic map; and some feedback modes are independent of the electromagnetic map, that is, when feeding back the first information in the feedback modes, the terminal does not need to use the electromagnetic map. In this embodiment of this application, when a feedback mode is associated with the electromagnetic map when the first information is fed back, assuming that the feedback mode is the first feedback mode, the access network device may send, to the terminal, the electromagnetic map of the first spatial information corresponding to the first feedback mode; or when a feedback mode is independent of the electromagnetic map when the first information is fed back, assuming that the feedback mode is a second feedback mode, the access network device no longer sends, to the terminal, an electromagnetic map of second spatial information corresponding to the second feedback mode. According to the foregoing descriptions, the access network device sends, to the terminal, a part of the electromagnetic map corresponding to the spatial information, and does not need to send the complete electromagnetic map, thereby reducing radio resource overhead for transmitting the electromagnetic map.

### [Embodiment 2]

A terminal may collect accuracy information of channel information fed back by the terminal in different feedback modes, and an access network device may determine a correspondence between spatial information and a feedback mode based on the information fed back by the terminal.

For example, the terminal may send second information to the access network device, where the second information is the accuracy information of the channel information fed back by the terminal in the different feedback modes, and the accuracy information of the channel information is used for determining the correspondence between the spatial information and the feedback mode. Optionally, the accuracy information of the channel information fed back in the different feedback modes includes: accuracy information of the channel information fed back by the terminal at different locations and/or at different times in the different feedback modes.

In a possible implementation, the terminal may collect the accuracy information of the channel information fed back by the terminal to the access network device in the different feedback modes. For example, the terminal may determine first information fed back by the terminal in different feedback modes; the terminal reconstructs a channel based on the first information; the terminal determines a local channel based on a downlink reference signal; and the terminal determines a difference degree between the reconstructed channel and the local channel. It may be understood that a smaller difference degree between the reconstructed channel and the local channel indicates higher accuracy of the first information fed back in the current feedback mode; otherwise, it indicates lower accuracy. In the following example, difference degree information between the reconstructed channel and the local channel indicates accuracy information of the channel information fed back to the access network device. The difference degree information between the reconstructed channel and the local channel may be referred to as difference degree information for short. For example, at a location 1, the terminal separately determines that difference degree information corresponding to a type-II CSI feedback mode is 0.85, difference degree information corresponding to a mode for feeding back calibrated multipath information is 0.91, and difference degree information corresponding to an AI feedback mode is 0.92. The second information fed back by the terminal to the access network device may be represented as {(terminal location), {type-II CSI feedback mode: 0.85}, {mode for feeding back calibrated multipath information: 0.91}, {AI feedback mode: 0.92}}. For example, a location of the terminal may be represented by using a longitude coordinate and a latitude coordinate of the terminal, for example, represented as [longitude coordinate, longitude coordinate].

Alternatively, the terminal may collect the accuracy information of the channel information fed back by the terminal to the access network device at different time. For example, the time may be a slot, and the second information fed back by the terminal to the access network device may be represented as {UE location, {difference degree information of a feedback mode 1 in a slot t₁, difference degree information of the feedback mode 1 in a slot t₂, ...}}, and the like. For example, for the type-II CSI feedback mode, the second information fed back by the terminal to the access network device may be represented as {(terminal location), {type-II CSI feedback: 0.85, 0.83, 0.87, ...}}. Optionally, the second information further includes indication information of a slot, for example, a slot number. Alternatively, when the second information does not include indication information of a slot, the access network device may infer, based on time at which the second information is received, time corresponding to a plurality of pieces of accuracy information included in the second information.

Alternatively, the terminal may collect the accuracy information of the channel information fed back by the terminal to the access network device at different locations. For example, the second information fed back by the terminal to the access network device may be represented as {{terminal location 1, {difference degree information of a feedback mode 1}, ...}, {terminal location 2, {difference degree information of a feedback mode 2}, ...}, ...}.

It may be understood that the terminal may combine at least two of difference degree information of different feedback modes, difference degree information at different time, or difference degree information at different locations, and feed back combined information as the second information to the access network device. For example, as shown in FIG. 7, the terminal is moving. As the terminal moves, a geographical location of the terminal changes. In a slot 1, the terminal is located at a location 1, and the terminal collects feedback modes three times. In a slot 2, the terminal is located at a location 2, and the terminal collects feedback modes five times. In a slot 3, the terminal is located at a location 3, and the terminal collects feedback modes twice. In a slot 4, the terminal is located at a location 4, and the terminal collects feedback modes once. The terminal obtains accuracy information corresponding to the 11 feedback modes, combines the accuracy information corresponding to the 11 feedback modes to generate the second information, and reports the second information to the access network device. Optionally, the 11 feedback modes may be the same or different. This is not limited.

In a possible implementation, the terminal may periodically report the second information to the access network device. For example, the terminal reports the second information to the access network device at intervals of a period T. Alternatively, the terminal may aperiodically report the second information to the access network device. For example, during connection between the terminal and the access network device, when the terminal receives activation signaling or a specific condition is satisfied, the terminal reports the second information to the access network device. For example, the condition includes difference degree information collected by the terminal being greater than or equal to a threshold, and the like.

Optionally, the terminal may compress the second information, and the terminal feeds back the compressed second information to the access network device. For example, a compression manner includes fixed-length compression. For example, when a quantity of collected difference degree information reaches a fixed value, the terminal compresses the difference degree information with the fixed quantity in a fixed-length compression manner. Alternatively, the terminal may perform variable-length compression, entropy compression, or other compression on the second information. In this case, the terminal needs to indicate a length of the compressed second information to the access network device.

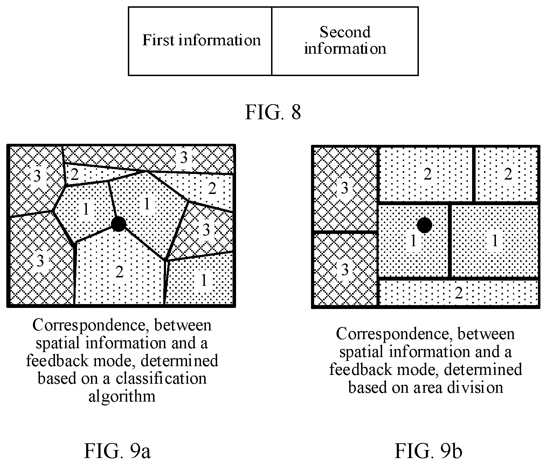

Optionally, the second information and the first information may be transmitted together. For example, the second information may be concatenated after the first information for transmission, as shown in FIG. 8. Optionally, if the first information includes the location information of the terminal, for example, in the mode for feeding back calibrated multipath information, the first information fed back by the terminal may include the location information of the terminal, and the location information of the terminal may not be fed back in the second information. Optionally, if a feedback mode in the second information is the same as a feedback mode corresponding to the first information, the second information may no longer include an identifier of the feedback mode.

After receiving the second information, the access network device may determine the correspondence between the spatial information and the feedback mode based on the second information. For example, after receiving the second information, the access network device may determine the correspondence between the spatial information and the feedback mode based on a classification algorithm. For example, the classification algorithm includes: machine learning statistical classification (for example, a decision tree or an SVM algorithm), clustering (for example, a K-means or DBSCAN algorithm), and deep learning (deep learning, DL) (for example, neural network-based classification). The correspondence between the spatial information and the feedback mode determined based on the classification algorithm is shown in FIG. 9a. Alternatively, after receiving the second information, the access network device may determine the correspondence between the spatial information and the feedback mode based on area division. For example, the access network device may divide a geographical map into different areas, and one area may correspond to one reference point. The access network device may determine an optimal feedback mode corresponding to one geographical area, and establish a correspondence between a reference point corresponding to the geographical area and the feedback mode. Alternatively, the access network device may determine an optimal feedback mode corresponding to an area corresponding to a reference point in an electromagnetic map, and determine a correspondence between the reference point and the optimal feedback mode. Alternatively, the access network device may determine an optimal feedback mode corresponding to an area corresponding to a node in a K-ary tree, and establish a correspondence between the node and the optimal feedback mode. The correspondence between the spatial information and the feedback mode determined based on area division is shown in FIG. 9b. In a possible implementation, the difference degree information of the feedback mode includes a cosine similarity between the reconstructed channel and the local channel corresponding to the feedback mode. For example, for one piece of spatial information, the terminal reports cosine similarities of two feedback modes. When the two feedback modes correspond to a same feedback bit (that is, a bit of the first information), the access network device selects a feedback mode with a superior cosine similarity, and establishes a correspondence between the feedback mode and the spatial information. Alternatively, the difference degree information of the feedback mode includes a normalized mean squared error (normalized mean squared error, NMSE) between the reconstructed channel and the local channel corresponding to the feedback mode. For example, for one piece of spatial information, the terminal reports NMSEs of two feedback modes. When the two feedback modes correspond to a same feedback bit, the access network device preferentially selects a feedback mode with a smaller NMSE, and establishes a correspondence between the feedback mode and the spatial information.

### [Embodiment 3]

An access network device may update a "correspondence between spatial information and a feedback mode". For example, the access network device sends third information to a terminal, and the terminal obtains the third information. The third information is used for updating the correspondence between the spatial information and the feedback mode. For example, the spatial information and the feedback mode that are indicated by the access network device to the terminal in step 310 in FIG. 3 are updated.

For example, the access network device may update, based on received second information, an upper-layer instruction, or the like, the correspondence between the spatial information and the feedback mode that has been indicated to the terminal. The update includes at least one of the following: addition, deletion, and replacement. For example, updating the correspondence between the spatial information and the feedback mode includes at least one of the following: deleting a feedback mode corresponding to one or more pieces of spatial information, replacing a feedback mode corresponding to one or more pieces of spatial information, or adding a feedback mode corresponding to one or more pieces of spatial information.
1. Update based on an electromagnetic map or a geographical map.
   a. The access network device performs update based on a reference point. The reference point may be a reference point in the electromagnetic map or a reference point in the geographical map.

For example, the access network device may indicate, to the terminal, the to-be-updated correspondence between the spatial information and the feedback mode. When one piece of spatial information corresponds to one feedback mode, the to-be-updated correspondence between the spatial information and the feedback mode indicated by the access network device to the terminal may be represented as {spatial information 1, feedback mode} and {spatial information 2, feedback mode}. After receiving the update information, the terminal updates, based on the indication, the feedback modes corresponding to the spatial information 1 and the spatial information 2. Alternatively, when one piece of spatial information corresponds to a plurality of feedback modes, the to-be-updated correspondence between the spatial information and the feedback mode indicated by the access network device to the terminal may be represented as {{spatial information 1, spatial information 2}, feedback mode} and {{spatial information 3, spatial information 4}, feedback mode}. After receiving the update information, the terminal updates, based on the indication, the feedback mode corresponding to the spatial information 1 and the spatial information 2, and updates the feedback mode corresponding to the spatial information 3 and the spatial information 4.

It may be understood that the spatial information may be represented by using coordinates, an index, or the like of the reference point in the electromagnetic map or in the geographical map. Alternatively, the access network device may update the correspondence between the spatial information and the feedback mode by using a bitmap. This is not limited. For a manner of indicating the correspondence between the spatial information and the feedback mode based on a location, refer to the foregoing descriptions.

b. The access network device performs update based on an area.

For example, the to-be-updated correspondence between the spatial information and the feedback mode indicated by the access network device to the terminal may be represented as {area 1, feedback mode}. The terminal updates, based on the indication of the access network device, the feedback mode corresponding to the area 1. Alternatively, the to-be-updated correspondence between the spatial information and the feedback mode may be represented as {{area 1, area 2}, feedback mode}. The terminal updates the feedback mode corresponding to the area 1 and the area 2 based on the indication of the access network device.

Optionally, the area means a contiguous and connected area. For example, the access network device may indicate an area to the terminal in a form of {center, radius}. The terminal may determine a circular area based on the center and the radius, and a feedback mode corresponding to all reference points covered by the circular area is updated to a feedback mode corresponding to the area. Alternatively, the access network device indicates an area to the terminal in a form of {cuboid center, length, width, height}. The terminal may determine a cuboid based on the cuboid center, the length, the width, and the height, and a feedback mode corresponding to all reference points covered by the cuboid is updated to a feedback mode corresponding to the area.

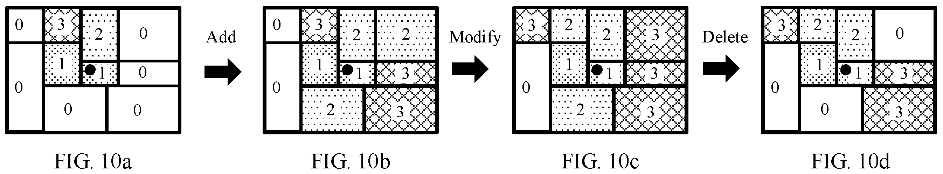

FIG. 10a shows a correspondence between spatial information and a feedback mode. A box represents an area corresponding to the spatial information, and a number in the box represents a feedback mode corresponding to the spatial information. For example, when a number in a box is 3, it indicates that the spatial information corresponding to the box corresponds to a feedback mode 3. When a number in a box is 0, it indicates that no feedback mode is configured for the spatial information corresponding to the box. The access network device may add a correspondence between spatial information and a feedback mode based on the correspondence shown in FIG. 10a. For example, as shown in FIG. 10b, the access network device adds a feedback mode 2, a feedback mode 3, a feedback mode 3, and a feedback mode 2 respectively to several pieces of spatial information for which no feedback mode is configured. The access network device may further modify a correspondence between spatial information and a feedback mode. As shown in FIG. 10c, a piece of spatial information corresponding to a feedback mode 2 may be modified by the access network device to correspond to a feedback mode 3. The access network device may further delete a correspondence between spatial information and a feedback mode. As shown in FIG. 10d, for a feedback mode 3 corresponding to a piece of spatial information, the access network device may delete the feedback mode corresponding to the spatial information.

### 2. Update based on a K-ary tree.

In the foregoing descriptions, in a structure of the K-ary tree, the correspondence between the spatial information and the feedback mode may be represented as [index of a leaf node, key value information]. Because operations such as addition, update, and deletion only involve a change of the feedback mode, the access network device may modify the key value information corresponding to the index of the leaf node.

It may be understood that in the foregoing descriptions, "adding the feedback mode corresponding to the one piece of spatial information" includes: adding a correspondence between the one piece of spatial information and the feedback mode. For example, when no feedback mode is configured for a piece of spatial information, a corresponding feedback mode may be configured for the spatial information in an update process. Alternatively, "adding the feedback mode corresponding to the one piece of spatial information" may be further understood as: dividing the one piece of spatial information into a plurality of subspaces, and adding correspondences between the plurality of subspaces and the feedback mode. It may be understood that, before the spatial information is divided into the plurality of pieces of sub-spatial information, a corresponding feedback mode may be present, or a corresponding feedback mode is not configured. This is not limited. In the process descriptions, a granularity of the spatial information is refined, to improve accuracy of the correspondence between the spatial information and the feedback mode.

For example, the access network device may refine the correspondence between the spatial information and the feedback mode based on the second information reported by the terminal, the upper-layer instruction, or the like.
1. The correspondence between the spatial information and the feedback mode is refined based on a reference point.
   a. The access network device indicates an identifier of a to-be-added reference point to the terminal. When receiving the indication, the terminal may divide an area corresponding to the reference point into a plurality of sub-areas. The reference point may be a reference point in the electromagnetic map, or a reference point in the geographical map.

For example, an added correspondence between spatial information and a feedback mode indicated by the access network device to the terminal may be {reference point 1, feedback mode 2, feedback mode 3, feedback mode 4}. When receiving the indication information, the terminal may divide an area corresponding to the reference point into three sub-areas that correspond to a feedback mode 2, a feedback mode 3, and a feedback mode 4 respectively. Further, the access network device may indicate a correspondence between a sub-area and the feedback mode to the terminal. Alternatively, the correspondence between the sub-area and the feedback mode may be predefined, and the terminal may determine the correspondence between the feedback mode and the sub-area according to a predefined rule. Further, the access network device may indicate, to the terminal, a space corresponding to each sub-area. For example, the space corresponding to each sub-area may be represented as {center, radius}, {cuboid center, length, width, height}, or the like. Alternatively, the terminal may divide an area corresponding to the reference point into a corresponding quantity of sub-areas or the like in a predefined manner.

2. The correspondence between the spatial information and the feedback mode is refined based on a K-ary tree.

The access network device indicates, to the terminal, an identifier of a to-be-added node and information corresponding to the node. For example, the information corresponding to the node includes added spatial information of the node and a feedback mode corresponding to the spatial information. For example, the feedback mode may be represented by using a key value, and the spatial information may be represented by using the identifier of the node.

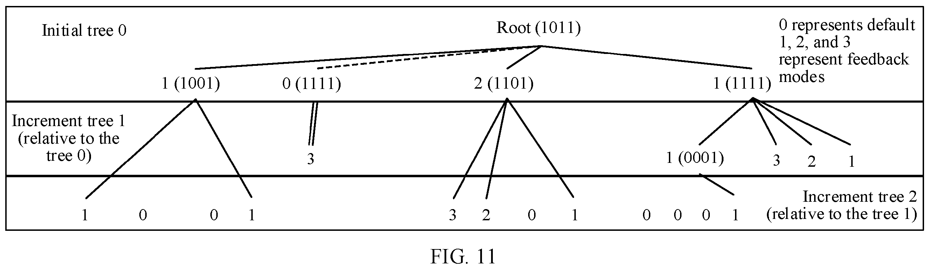

In a possible implementation, FIG. 11 is a diagram of a correspondence between spatial information of an added node in a quadtree and a feedback mode. Initially, the access network device indicates three areas to the terminal, and the three areas correspond to a feedback mode 1, a feedback mode 2, and a feedback mode 3 respectively. In this case, the quadtree is referred to as an initial tree 0. In a 1^{st} increment, the access network device indicates to the terminal that a 2^{nd} area corresponds to a feedback mode 3, and a 4^{th} area is subdivided, for example, the 4^{th} area is further divided into four sub-areas corresponding to a feedback mode 1, a feedback mode 3, a feedback mode 2, and a feedback mode 1 respectively. In this case, the quadtree is referred to as an increment tree 1. In a 2^{nd} increment, the access network device indicates to the terminal that a 1^{st} area and a 3^{rd} area are subdivided, and the 4^{th} area is further subdivided. In this case, the quadtree is referred to as an increment tree 2. For example, in the 2^{nd} increment, the 1^{st} area is subdivided into four sub-areas, and a 1^{st} sub-area and a 4^{th} sub-area both correspond to a feedback mode 1. No feedback mode is configured for a 2^{nd} sub-area and a 3^{rd} sub-area, and a corresponding feedback mode may be 0. A 2^{nd} area is subdivided into four sub-areas. A 1^{st} sub-area, a 2^{nd} sub-area, and a 4^{th} sub-area correspond to a feedback mode 3, a feedback mode 2, and a feedback mode 1 respectively. No feedback mode is configured for a 3^{rd} sub-area, and a corresponding feedback mode is 0. A 4^{th} area is divided into four sub-areas. A 4^{th} sub-area corresponds to a feedback mode 1, no feedback mode is configured for a 1^{st} sub-area to a 3^{rd} sub-area, and a corresponding feedback mode is 0.

According to the foregoing design, the access network device can flexibly update the correspondence between the spatial information and the feedback mode, so that the terminal can transmit the channel information in a corresponding space in an optimal feedback mode. Further, the access network device may refine the correspondence between the spatial information and the feedback mode based on accuracy information of different feedback modes reported by the terminal, to improve granularity of the spatial information and the feedback mode.

### [Embodiment 4]

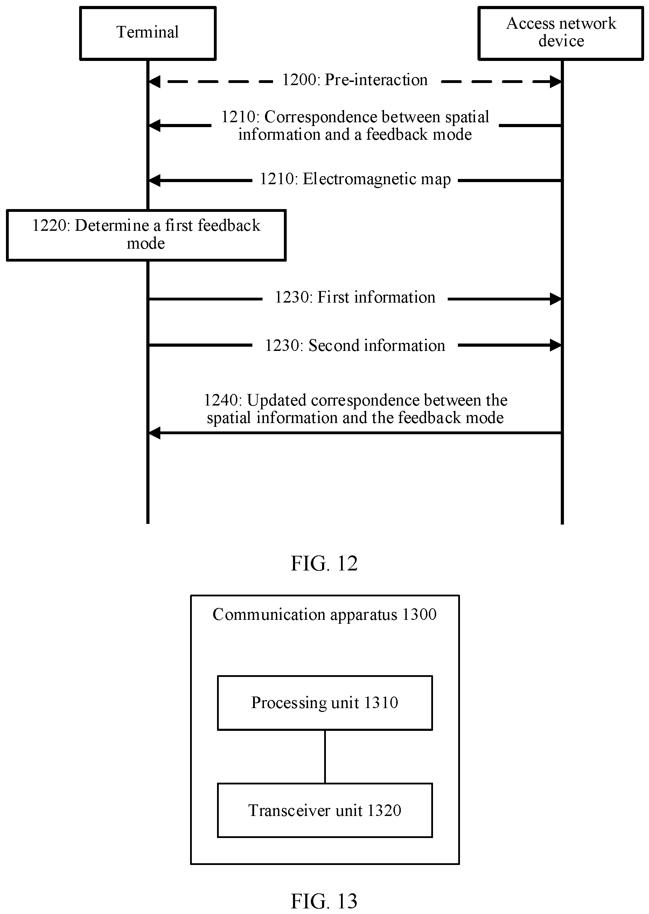

An embodiment of this application further provides a procedure. As shown in FIG. 12, the procedure includes the following steps.

Step 1200: A pre-interaction process between a terminal and an access network device. The pre-interaction process may be actively initiated by the terminal or by the access network device. This is not limited. In the pre-interaction process, the terminal and the access network device may exchange the following information.
(a) Activation of feedback of first information, that is, channel information, based on a correspondence between spatial information and a feedback mode.

The feedback of the first information based on the correspondence between the spatial information and the feedback mode may also be referred to as feedback of the first information based on a feedback mode map. It may be understood that the feedback mode map includes the correspondence between the spatial information and the feedback mode. For example, when the terminal receives the activation indication, the terminal feeds back the first information to the access network device according to the method in embodiments of this application; otherwise, the terminal itself determines a manner of feeding back the channel information to the access network device.

(b) Activation of a delivery procedure of a correspondence between spatial information and a feedback mode.

It may be understood that a delivery procedure of the correspondence between the spatial information and the feedback mode may be referred to as a delivery procedure of a feedback mode map. For example, when the terminal is activated, the terminal receives the feedback mode map from the access network device, and obtains the correspondence between the spatial information and the feedback mode from the feedback mode map.

(c) Activation of the terminal to collect accuracy information of a feedback mode and report second information to the access network device.

A process of the activation is optional. When the terminal is activated, the terminal may collect accuracy information corresponding to different feedback modes, and report the second information including the accuracy information to the access network device. Alternatively, when the terminal is not activated, the terminal no longer collects accuracy information corresponding to different feedback modes, and no longer reports the second information to the terminal.

(d) The terminal or the access network device exchanges at least one piece of the following information:
a manner of indicating spatial information, for example, indicating the spatial information by using a reference point in an electromagnetic map or in a geographical map, or indicating the spatial information by using a node in a K-ary tree; a correspondence between a feedback mode and an identifier; or whether the spatial information and the feedback mode are indicated in association with the reference point in the electromagnetic map.

(e) A manner of determining a difference degree between a reconstructed channel and a local channel.

For example, the access network device and the terminal may negotiate the manner of determining the difference degree between the reconstructed channel and the local channel, for example, may measure the difference degree between the reconstructed channel and the local channel by using a cosine similarity function and an NMSE.

It may be understood that, in the foregoing pre-interaction process, the information exchanged between the terminal and the access network device may alternatively be predefined. Therefore, no further exchange needs to be performed by the terminal and the access network device. Therefore, step 1200 is optional.

Step 1210: The access network device sends the electromagnetic map and the correspondence between the spatial information and the feedback mode to the terminal.

For example, the electromagnetic map and the correspondence between the spatial information and the feedback mode may be transmitted together, or may be transmitted independently of each other. A specific transmission mode may be predefined, indicated by the access network device, reported by the terminal, or the like.

Step 1220: The terminal determines a first feedback mode based on the correspondence between the spatial information and the feedback mode.

For example, the terminal determines matched spatial information based on a location of the terminal, and the matched spatial information may be referred to as first spatial information. A feedback mode corresponding to the first spatial information determined by the terminal is referred to as the first feedback mode.

Step 1230: The terminal sends the first information to the access network device based on the first feedback mode.

Optionally, the terminal may collect accuracy information of the first information fed back by the terminal in different feedback modes in different slots and at different locations, and the terminal feeds back second information including the accuracy information to the access network device. The access network device may determine the correspondence between the spatial information and the feedback mode based on the second information, or update the determined spatial information and the feedback mode. The first information and the second information may be transmitted together or transmitted independently. This is not limited. For example, a transmission mode of the first information and the second information may be specified in a protocol, indicated by the access network device, or reported by the terminal. This is not limited.

Step 1240: The access network device sends updated correspondence between the spatial information and the feedback mode to the terminal.

After receiving the updated correspondence between the spatial information and the feedback mode, the terminal may determine, based on the updated spatial information and the feedback mode, the spatial information that matches location information of the terminal, to further determine a matched feedback mode; and send the second information to the access network device in the matched feedback mode.

According to the foregoing design, the access network device indicates the correspondence between the spatial information and the feedback mode to the terminal, the terminal can quickly determine a corresponding feedback mode for different spatial information based on the correspondence between the spatial information and the feedback mode, and send the channel information to the access network device in the determined feedback mode, so that compute resources of the terminal are reduced, and processing complexity at a terminal side is reduced.

It may be understood that, in embodiments of this application:
1. In each procedure, a sequence of different steps is not limited. In addition, each procedure may include fewer steps or more steps than the schematic flowchart or the text descriptions.
2. In embodiments of this application, "(for example, the terminal) receiving information from (for example, the access network device)" may be understood as that a source end of the information is the access network device, and a destination end of the information is the terminal, and may include: The terminal directly or indirectly receives the information from the access network device. Necessary processing, for example, a format change, may be performed on the information between the source end and the destination end for information sending. However, the destination end may understand valid information from the source end. A similar expression in this application may be understood similarly, and details are not described herein.

In the foregoing embodiments of this application, the method provided in embodiments of this application is described from a perspective of interaction between the terminal and the access network device. To implement functions in the method provided in embodiments of this application, the terminal, the access network device, or the like may include a hardware structure and/or a software module, and implement the functions in the form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

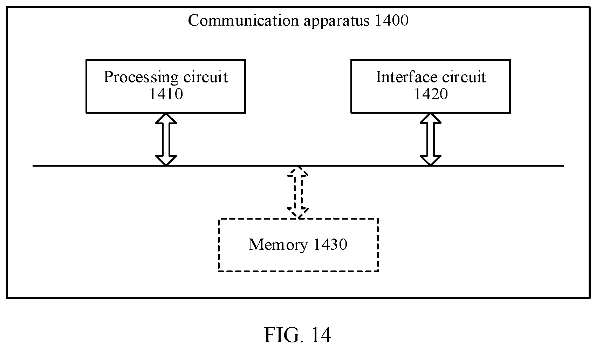

FIG. 13 and FIG. 14 are diagrams of structures of possible communication apparatuses according to embodiments of this application. These communication apparatuses may implement one or more corresponding functions in the foregoing method embodiments, for example, the functions implemented by the first communication apparatus, the second communication apparatus, or the like. Therefore, beneficial effects of the foregoing method embodiments may be achieved. In embodiments of this application, the communication apparatus may be a terminal or an access network device, or the communication apparatus may be a module (for example, a chip) used in the terminal or the access network device.

As shown in FIG. 13, a communication apparatus 1300 includes a processing unit 1310 and a transceiver unit 1320. The communication apparatus 1300 is configured to implement the function of the terminal or the access network device in the foregoing method embodiment in FIG. 3.

Optionally, the transceiver unit 1320 may also be referred to as an output unit, an interface unit, a communication unit, or the like. In a possible implementation, the transceiver unit 1320 includes at least one of a sending unit or a receiving unit. The sending unit and the receiving unit may be integrated together, or may be two independent units, or the like.

When the communication apparatus 1300 is configured to implement the function of the terminal in FIG. 3, specifically, the transceiver unit 1320 is configured to obtain indication information of a correspondence between spatial information and a feedback mode, where the feedback mode includes a mode in which the first communication apparatus feeds back channel information to the second communication apparatus; the processing unit 1310 is configured to generate first information; and the transceiver unit 1320 is further configured to feed back the first information to the second communication apparatus, where the first information is determined based on a first feedback mode, and the first feedback mode is determined based on the correspondence between the spatial information and the feedback mode and location information of the first communication apparatus.

In a possible implementation, the feedback mode includes a feedback mode associated with an electromagnetic map or a feedback mode independent of an electromagnetic map. For example, the feedback mode associated with the electromagnetic map includes a mode for feeding back location information and a mode for feeding back calibrated multipath information. The feedback mode independent of the electromagnetic map includes a type-II channel state information CSI feedback mode, an artificial intelligence AI feedback mode, and a prediction-based feedback mode.

In a possible implementation, the transceiver unit 1320 is further configured to feed back second information to the second communication apparatus, where the second information is accuracy information of the channel information fed back by the first terminal apparatus in different feedback modes, and the accuracy information of the channel information is used for determining the correspondence between the spatial information and the feedback mode.

In a possible implementation, the accuracy information of the channel information fed back in the different feedback modes includes: accuracy information of the channel information fed back by the first communication apparatus at different locations and/or at different times in the different feedback modes.

In a possible implementation, that the first feedback mode is determined based on the correspondence between the spatial information and the feedback mode and the location information of the first communication apparatus includes: the first feedback mode is a feedback mode corresponding to first spatial information, and the first spatial information is determined based on the location information of the first communication apparatus.

In a possible implementation, the spatial information is represented in the following manners: a reference point in the electromagnetic map, a leaf node of a K-ary tree, or a reference point in a geographical map.

In a possible implementation, when the spatial information is represented by using the reference point in the electromagnetic map, the obtaining the indication information of the correspondence between the spatial information and the feedback mode includes: obtaining the electromagnetic map, where the electromagnetic map includes indication information of a correspondence between the reference point and the feedback mode.

In a possible implementation, when the first feedback mode is associated with the electromagnetic map when the first information is fed back, the transceiver unit 1320 is further configured to obtain the electromagnetic map of the first spatial information corresponding to the first feedback mode.

In a possible implementation, the transceiver unit 1320 is further configured to obtain third information, where the third information is used for updating the correspondence between the spatial information and the feedback mode.

In a possible implementation, the updating the correspondence between the spatial information and the feedback mode includes at least one of the following: deleting a feedback mode corresponding to one or more pieces of spatial information, replacing a feedback mode corresponding to one or more pieces of spatial information, or adding a feedback mode corresponding to one or more pieces of spatial information.

In a possible implementation, the adding the feedback mode corresponding to the one piece of spatial information includes: adding a correspondence between the one piece of spatial information and the feedback mode; or dividing the spatial information into a plurality of pieces of sub-spatial information, and adding correspondences between the plurality of subspaces and the feedback mode.

When the communication apparatus 1300 is configured to implement the function of the access network device in FIG. 3, specifically, the processing unit 1310 is configured to generate indication information of a correspondence between spatial information and a feedback mode; the transceiver unit 1320 is configured to send the indication information of the correspondence between the spatial information and the feedback mode to the first communication apparatus, where the feedback mode includes a mode in which the first communication apparatus feeds back channel information to the second communication apparatus; and the transceiver unit 1320 is further configured to receive first information from the first communication apparatus, where the first information is determined based on a first feedback mode, and the first feedback mode is determined based on the correspondence between the spatial information and the feedback mode and location information of the first communication apparatus.

In a possible implementation, the feedback mode includes a feedback mode associated with an electromagnetic map or a feedback mode independent of an electromagnetic map. Optionally, the feedback mode associated with the electromagnetic map includes a mode for feeding back location information and a mode for feeding back calibrated multipath information. The feedback mode independent of the electromagnetic map includes a type-II channel state information CSI feedback mode, an artificial intelligence AI feedback mode, and a prediction-based feedback mode.

In a possible implementation, the transceiver unit 1320 is further configured to receive second information from the first communication apparatus, where the second information is accuracy information of the channel information fed back by the first terminal apparatus in different feedback modes, and the accuracy information of the channel information is used for determining the correspondence between the spatial information and the feedback mode.

In a possible implementation, the accuracy information of the channel information fed back in the different feedback modes includes: accuracy information of the channel information fed back by the first communication apparatus at different locations and/or at different times in the different feedback modes.

In a possible implementation, that the first feedback mode is determined based on the correspondence between the spatial information and the feedback mode and the location information of the first communication apparatus includes: the first feedback mode is a feedback mode corresponding to first spatial information, and the first spatial information is determined based on the location information of the first communication apparatus.

In a possible implementation, the spatial information is represented in the following manners: a reference point in the electromagnetic map, a leaf node of a K-ary tree, or a reference point in a geographical map.

In a possible implementation, when the spatial information is represented by using the reference point in the electromagnetic map, the sending the indication information of the correspondence between the spatial information and the feedback mode includes: sending the electromagnetic map, where the electromagnetic map includes indication information of a correspondence between the reference point and the feedback mode.

In a possible implementation, when the first feedback mode is associated with the electromagnetic map when the first information is fed back, the transceiver unit 1320 is further configured to send the electromagnetic map of the first spatial information corresponding to the first feedback mode.

In a possible implementation, the transceiver unit 1320 is further configured to send third information, where the third information is used for updating the correspondence between the spatial information and the feedback mode.

In a possible implementation, the updating the correspondence between the spatial information and the feedback mode includes at least one of the following: deleting a feedback mode corresponding to one or more pieces of spatial information, replacing a feedback mode corresponding to one or more pieces of spatial information, or adding a feedback mode corresponding to one or more pieces of spatial information.

In a possible implementation, the adding the feedback mode corresponding to the one piece of spatial information includes: adding a correspondence between the one piece of spatial information and the feedback mode; or dividing the spatial information into a plurality of pieces of sub-spatial information, and adding correspondences between the plurality of subspaces and the feedback mode.

For more detailed descriptions of the processing unit 1310 and the transceiver unit 1320, refer to the descriptions in FIG. 3 in the foregoing method embodiments. Details are not described herein again.

In a possible implementation, when the access network device uses an O-RAN architecture, the processing unit 1310 may be located on an O-CU entity, and the transceiver unit 1320 may be located on an O-DU entity or an O-RU entity. Optionally, when the O-CU entity includes an O-CU-CP entity and an O-CU-UP entity, the processing unit 1310 may be located on the O-CU-CP entity or the O-CU-UP entity. Alternatively, the processing unit 1310 is located on the O-DU entity, and the transceiver unit 1320 is located on the O-RU entity. Alternatively, both the processing unit 1310 and the transceiver unit 1320 are located on the O-DU entity, the O-RU entity, or the like. This is not limited.

It may be understood that, in embodiments of this application, division into the units is an example, and is merely logical function division. In actual implementation, there may be another division manner. In addition, functional units in embodiments of this application may be integrated into one physical device (for example, a processor), or each functional unit may be an independent physical device, or two or more units may be integrated into one unit for implementation. The integrated unit may be implemented in a form of hardware, or implemented in a form of a software functional module, or the like.

As shown in FIG. 14, a communication apparatus 1400 includes a processing circuit 1410 and an interface circuit 1420. The processing circuit 1410 and the interface circuit 1420 are coupled to each other. It may be understood that the processing circuit 1410 may be a processor, and the interface circuit 1420 may be a transceiver or an input/output interface.

Optionally, the communication apparatus 1400 may further include a memory 1430, configured to store instructions executed by the processing circuit 1410, store input data for the processing circuit 1410 to run instructions, or store data generated after the processing circuit 1410 runs instructions.

Optionally, the memory (for example, 1430) in this embodiment of this application may be integrated into the processing circuit (for example, 1410), or the memory (for example, 1430) and the processing circuit (for example, 1410) may be separately disposed.

When the communication apparatus 1400 is configured to implement the method shown in FIG. 3, the processing circuit 1410 is configured to implement a function of the processing unit 1310, and the interface circuit 1420 is configured to implement a function of the transceiver unit 1320.

When the communication apparatus is a chip used in a terminal, the chip implements the function of the terminal in the foregoing method embodiments. The chip receives, via another module (for example, a radio frequency module or an antenna) in the terminal, information sent by the access network device to the terminal. Alternatively, the chip sends information to another module (for example, a radio frequency module or an antenna) in the terminal, where the information is sent by the terminal to the access network device.

When the communication apparatus is a module used in the access network device, the module implements the function of the access network device in the foregoing method embodiments. The module receives information from another module (for example, a radio frequency module or an antenna) in the access network device, where the information is sent by the terminal to the access network device. Alternatively, the module sends information to another module (for example, a radio frequency module or an antenna) in the access network device, where the information is sent by the access network device to the terminal.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

For example, the memory in embodiments of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well-known in the art.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in the ASIC.

An embodiment of this application further provides a communication apparatus. The communication apparatus includes a processor and a memory. The processor is configured to implement the function of the access network device or the terminal in FIG. 3. For example, the processor is configured to execute a computer program or instructions stored in the memory, the memory is configured to store the computer program or the instructions, and when the computer program or the instructions are run, the method performed by the access network device or the terminal in FIG. 3 is performed. Optionally, the processor is coupled to the memory.

An embodiment of this application further provides a communication apparatus, including a processor. The processor is configured to implement the function of the access network device or the terminal in FIG. 3.

An embodiment of this application further provides a computer-readable storage medium. The computer-readable storage medium stores instructions, and the instructions may also be referred to as a computer program, computer program code, or the like. When the instructions are run on a computer, the computer is caused to perform the function of the access network device or the terminal in FIG. 3 in the foregoing method embodiments.

An embodiment of this application further provides a computer program product, including a computer program or instructions. The computer program product includes a computer program or instructions used for performing the method performed by the terminal in FIG. 3, or the computer program product includes a computer program or instructions used for performing the method performed by the access network device in FIG. 3.

An embodiment of this application further provides a chip. The chip includes a processor. The processor is coupled to a memory. The processor is configured to execute a computer program or instructions stored in the memory, to implement the function of the access network device or the terminal in FIG. 3.

An embodiment of this application further provides a communication system, including a first communication apparatus and a second communication apparatus. The first communication apparatus is configured to implement the function of the terminal in FIG. 3, and the second communication apparatus is configured to implement the function of the access network device in FIG. 3.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, all or a part of the procedures or functions in embodiments of this application are executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions of different embodiments are consistent and may be mutually referenced, and technical features in different embodiments may be combined based on an internal logical relationship thereof to form a new embodiment.

## Claims

1. A channel information feedback method, wherein the method is applied to a first communication apparatus and comprises:
obtaining indication information of a correspondence between spatial information and a feedback mode, wherein the feedback mode comprises a mode in which the first communication apparatus feeds back channel information to a second communication apparatus; and
feeding back first information to the second communication apparatus, wherein the first information is determined based on a first feedback mode, and the first feedback mode is determined based on the correspondence between the spatial information and the feedback mode and location information of the first communication apparatus.

2. The method according to claim 1, wherein the feedback mode comprises a feedback mode associated with an electromagnetic map or a feedback mode independent of an electromagnetic map.

3. The method according to claim 2, wherein the feedback mode associated with the electromagnetic map comprises a mode for feeding back location information and a mode for feeding back calibrated multipath information.

4. The method according to claim 2, wherein the feedback mode independent of the electromagnetic map comprises a type-II channel state information CSI feedback mode, an artificial intelligence AI feedback mode, and a prediction-based feedback mode.

5. The method according to any one of claims 1 to 4, further comprising:
feeding back second information to the second communication apparatus, wherein the second information is accuracy information of the channel information fed back by the first terminal apparatus in different feedback modes, and the accuracy information of the channel information is used for determining the correspondence between the spatial information and the feedback mode.

6. The method according to claim 5, wherein the accuracy information of the channel information fed back in the different feedback modes comprises accuracy information of the channel information fed back by the first communication apparatus at different locations and/or at different times in the different feedback modes.

7. The method according to any one of claims 1 to 6, wherein that the first feedback mode is determined based on the correspondence between the spatial information and the feedback mode and the location information of the first communication apparatus comprises:
the first feedback mode is a feedback mode corresponding to first spatial information, and the first spatial information is determined based on the location information of the first communication apparatus.

8. The method according to any one of claims 1 to 7, wherein the spatial information is represented in the following manners: a reference point in the electromagnetic map, a leaf node of a K-ary tree, or a reference point in a geographical map.

9. The method according to claim 8, wherein when the spatial information is represented by using the reference point in the electromagnetic map, the obtaining the indication information of the correspondence between the spatial information and the feedback mode comprises: obtaining the electromagnetic map, wherein the electromagnetic map comprises indication information of a correspondence between the reference point and the feedback mode.

10. The method according to any one of claims 1 to 9, wherein when the first feedback mode is associated with the electromagnetic map when the first information is fed back, the method further comprises:
obtaining the electromagnetic map of the first spatial information corresponding to the first feedback mode.

11. The method according to any one of claims 1 to 10, further comprising:
obtaining third information, wherein the third information is used for updating the correspondence between the spatial information and the feedback mode.

12. The method according to claim 11, wherein the updating the correspondence between the spatial information and the feedback mode comprises at least one of the following: deleting a feedback mode corresponding to one or more pieces of spatial information, replacing a feedback mode corresponding to one or more pieces of spatial information, or adding a feedback mode corresponding to one or more pieces of spatial information.

13. The method according to claim 12, wherein the adding the feedback mode corresponding to the one piece of spatial information comprises: adding a correspondence between the one piece of spatial information and the feedback mode; or dividing the spatial information into a plurality of pieces of sub-spatial information, and adding correspondences between the plurality of subspaces and the feedback mode.

14. A channel information feedback method, wherein the method is applied to a second communication apparatus and comprises:
sending indication information of a correspondence between spatial information and a feedback mode to a first communication apparatus, wherein the feedback mode comprises a mode in which the first communication apparatus feeds back channel information to the second communication apparatus; and
receiving first information from the first communication apparatus, wherein the first information is determined based on a first feedback mode, and the first feedback mode is determined based on the correspondence between the spatial information and the feedback mode and location information of the first communication apparatus.

15. The method according to claim 14, wherein the feedback mode comprises a feedback mode associated with an electromagnetic map or a feedback mode independent of an electromagnetic map.

16. The method according to claim 15, wherein the feedback mode associated with the electromagnetic map comprises a mode for feeding back location information and a mode for feeding back calibrated multipath information.

17. The method according to claim 15, wherein the feedback mode independent of the electromagnetic map comprises a type-II channel state information CSI feedback mode, an artificial intelligence AI feedback mode, and a prediction-based feedback mode.

18. The method according to any one of claims 14 to 17, further comprising:
receiving second information from the first communication apparatus, wherein the second information is accuracy information of the channel information fed back by the first terminal apparatus in different feedback modes, and the accuracy information of the channel information is used for determining the correspondence between the spatial information and the feedback mode.

19. The method according to claim 18, wherein the accuracy information of the channel information fed back in the different feedback modes comprises: accuracy information of the channel information fed back by the first communication apparatus at different locations and/or at different times in the different feedback modes.

20. The method according to any one of claims 14 to 19, wherein that the first feedback mode is determined based on the correspondence between the spatial information and the feedback mode and the location information of the first communication apparatus comprises:
the first feedback mode is a feedback mode corresponding to first spatial information, and the first spatial information is determined based on the location information of the first communication apparatus.

21. The method according to any one of claims 14 to 20, wherein the spatial information is represented in the following manners: a reference point in the electromagnetic map, a leaf node of a K-ary tree, or a reference point in a geographical map.

22. The method according to claim 21, wherein when the spatial information is represented by using the reference point in the electromagnetic map, the sending the indication information of the correspondence between the spatial information and the feedback mode comprises: sending the electromagnetic map, wherein the electromagnetic map comprises indication information of a correspondence between the reference point and the feedback mode.

23. The method according to any one of claims 14 to 22, wherein when the first feedback mode is associated with the electromagnetic map when the first information is fed back, the method further comprises:
sending the electromagnetic map of the first spatial information corresponding to the first feedback mode.

24. The method according to any one of claims 14 to 23, further comprising:
sending third information, wherein the third information is used for updating the correspondence between the spatial information and the feedback mode.

25. The method according to claim 24, wherein the updating the correspondence between the spatial information and the feedback mode comprises at least one of the following: deleting a feedback mode corresponding to one or more pieces of spatial information, replacing a feedback mode corresponding to one or more pieces of spatial information, or adding a feedback mode corresponding to one or more pieces of spatial information.

26. The method according to claim 25, wherein the adding the feedback mode corresponding to the one piece of spatial information comprises: adding a correspondence between the one piece of spatial information and the feedback mode; or dividing the spatial information into a plurality of pieces of sub-spatial information, and adding correspondences between the plurality of subspaces and the feedback mode.

27. A communication apparatus, comprising:
a processor, configured to execute a computer program or instructions stored in a memory; and
the memory, configured to store the computer program or the instructions, wherein
when the computer program or the instructions are run, the method according to any one of claims 1 to 13 is performed, or the method according to any one of claims 14 to 26 is performed.

28. A computer-readable storage medium, wherein the computer-readable storage medium stores instructions, and the instructions are run on a computer, to cause the computer to perform the method according to any one of claims 1 to 13 or the method according to any one of claims 14 to 26.

29. A computer program product, wherein the computer program product comprises a computer program or instructions used for performing the method according to any one of claims 1 to 13, or the computer program product comprises a computer program or instructions used for performing the method according to any one of claims 14 to 26.

30. A communication system, comprising:
a first communication apparatus, wherein the first communication apparatus is configured to perform the method according to any one of claims 1 to 13; and
a second communication apparatus, wherein the second communication apparatus is configured to perform the method according to any one of claims 14 to 26.
